# EUROPEAN PATENT SPECIFICATION

(11) **EP 2 417 653 B1**
(45) Date of publication and mention of the grant of the patent: **06.05.2015**
(21) Application number: 10761190.7
(22) Date of filing: 26.03.2010
(51) Int. Cl.: H01M 4/1391, H01M 4/04, H01M 4/36

(54) **BATTERY ELECTRODE PLATE AND PREPARATION METHOD THEREOF**
BATTERIEELEKTRODENPLATTE UND VERFAHREN ZU IHRER HERSTELLUNG
PLAQUE D'ÉLECTRODE DE BATTERIE ET SON PROCÉDÉ DE PRÉPARATION

(30) Priority: 09.04.2009 CN 200910049001
(43) Date of publication of application: 15.02.2012
(73) Proprietor: BYD Company Limited, Shenzhen, Guangdong 518118 (CN)
(72) Inventor: ZHANG, Tianci, Guangdong 518118 (CN); XU, Juntao, Guangdong 518118 (CN); YAN, Xiaoyong, Guangdong 518118 (CN); SUN, Huajun, Guangdong 518118 (CN)
(74) Representative: Hoffmann Eitle
(86) International application number: PCT/CN2010/071360
(87) International publication number: WO 2010/115361

(56) References cited:
- EP-A1- 2 006 941
- CN-A- 1 728 427
- CN-A- 101 002 351
- CN-A- 101 159 324
- CN-A- 101 330 138
- JP-A- 9 320 569
- JP-A- 57 072 264
- JP-A- 2003 077 463
- JP-A- 2003 346 787
- JP-A- 2007 214 038
- US-A1- 2006 024 579
- US-A1- 2008 248 387

## Description

### TECHNICAL FIELD OF THE INVENTON

The present invention relates to a battery electrode plate, a method of preparing the battery electrode plate and a secondary battery employing the battery electrode plate.

### BACKGROUND OF THE INVENTON

The amount of the electrode active material contained in the electrode plate is one of the important factors that affect the battery capacity. For example, for the lithium ion secondary battery, the amount of the active material especially the positive active material of the positive active plate affects the battery capacity and the cycling performance to some extent. The conventional process of preparing the battery electrode plate, i.e. single coating and forming process, comprises: coating the electrode material slurry onto a current collector substrate, then drying and calendering the coated current collector substrate coated with the electrode material so as to form battery electrode plate, in which each of the coating, drying and calendaring is only performed once. If the size of the current collector substrate is given, the battery capacity is generally increased by increasing the amount of the positive active material applied on the current collector substrate. Conventionally, the amount of the positive active material is generally increased by increasing the electrode material coated once onto the current collector substrate in the single coating step.

There are a couple of disadvantages with the above conventional process which are as follows: firstly, the space in the battery shell limits the thickness of the electrode plate, thus limiting the coating amount, so that the battery capacity is difficult to be greatly increased; secondly, if the amount of the electrode material coated once is too much, it may cause uneveness of the electrode material during calendering, and the electrode material is easy to drop out, as well as the surface of the electrode plate is not smooth, thus affecting the battery cycling performance.

Background art of interest is also disclosed in the following documents.

US 2006/0024579 A1 discloses solid composite electrodes with electrode active layers that include an electrode active material, an optional election conductive material, an optional binder and other optional additives. The solid composite electrodes are formed by the deposition of an electrode composition (slurry) onto a current collector in one or many layers. The electrode structure may be characterised by a porosity of the electrode composition layer that decreases in a direction from the back side of the layer (close to the current collector) towards the outer side of the layer. The gradient of the decrease in the porosity is controlled by the content of solid substance in the slurry, by the composition of the solvent in the slurry, by the temperature of the layer drying after deposition, as well as by the pressing or calendaring conditions for each layer.

In US 2008/0248387 A1, an anode is provided as one capable of suppressing rapid entrance/exit of lithium ions during quick charge-discharge and ensuring sufficient safety in use as an anode of a lithium-ion secondary battery having a current collector, and an active material-containing layer formed on the current collector, wherein the active material-containing layer is comprised of an outermost layer disposed on the farthest side from the current collector, and a lower layer composed of at least one layer disposed between the outermost layer and the current collector, and wherein a degree of flexion of the outermost layer is larger than a degree of selection of the lower layer.

EP 2 006 941 A1 discloses a battery electrode, which includes: a collector and an active material layer formed on a surface of the collector and including: an active material, and a conductive additive having a bulk density which is gradually decreased in a direction from a collector side of the active material layer to a surface side of the active material layer.

### SUMMARY OF THE INVENTION

The present invention is directed to at least partly solve the problems in the prior art that the battery capacity is increased only by increasing the amount of the electrode material coated onto the current collector substrate once.

The present invention provides a method of preparing a battery electrode plate for a lithium secondary battery as set out in Claim 1, and a battery electrode plate as set out in Claim 4. Optional features are set out in the remaining claims.

One embodiment of the present invention described herein provides a battery electrode plate, which comprises a current collector substrate, and at least two electrode material layers formed on the current collector substrate and containing an electrode active material.

Another embodiment of the present invention described herein provides a method of preparing a battery electrode plate, which comprises a coating step of coating a electrode material slurry containing an electrode active material onto a current collector substrate; a drying step of drying the current collector substrate coated with the electrode material so as to from an electrode material layer on the current collector substrate; a calendering step of calendering the current collector substrate on which the electrode material layer is formed; and a repeating step of repeating coating step to calendering step at least once so as to form the battery electrode plate.

In still another embodiment of the present invention there is provided a secondary battery, which comprises a battery shell; an electrolyte sealed in the battery shell; and an electrode assembly enclosed in the battery shell, in which the electrode assembly comprises a positive plate, a separator and a negative plate which are coiled or superposed in turn, and the positive and/or negative battery electrode plate is prepared by using a battery electrode plate, wherein the battery electrode plate comprises a current collector substrate, and at least two electrode material layers formed on the current collector substrate and containing electrode active material.

According to some embodiments of the present invention, the electrode material is coated onto the current collector substrate, dried and calendered in at least two steps, so at least two electrode material layers are formed on the current collector substrate, that is, the battery electrode plate is formed by repeating the steps of coating→drying→calendering. Therefore, for an electrode plate having a given thickness, more electrode material may be coated onto the current collector substrate, and the density of the electrode active material on the electrode plate is higher. In addition, the electrode plate has a high surface gloss, thus improving the battery capacity as well as the cycling performance of the secondary battery employing the electrode plate.

### BRIEF DESCRIPTION OF THE DRAWINGS

Therese and other aspects and advantages of the invention will become apparent and more readily appreciated from the following descriptions taken in conjunction with the drawings in which:
Fig. 1 is a sectional view of the battery electrode plate according to an embodiment of the present invention.
Fig. 2A-2C shows a first coating step, first drying step and first calendering step of the battery electrode plate according to an embodiment of the present invention.
Fig. 2D-2F shows a second coating step, second drying step and second calendering step of the battery electrode plate according to an embodiment of the present invention.
Fig. 3 shows that the electrode material layers are formed on the upper and bottome surface of the current collector substrate.

### DETAILED DESCRIPTION OF THE EMBODIMENTS OF THE INVENTION

The embodiments of the present invention will be described in detail with reference to the drawings as follows.

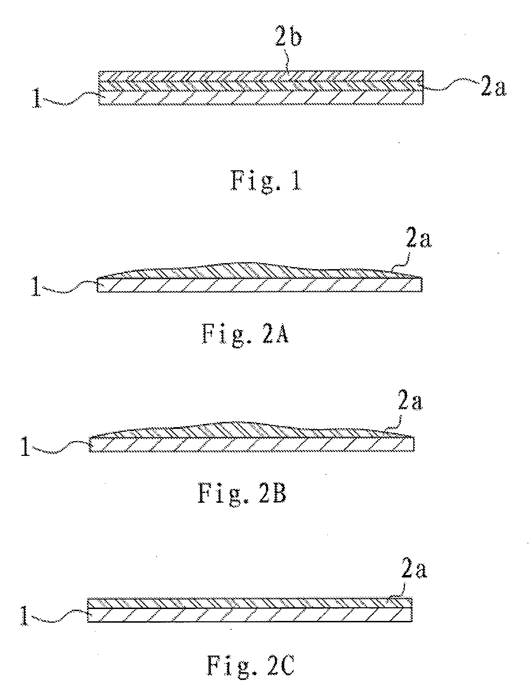

As shown in Fig.1, the battery electrode plate according to an embodiment of the present invention comprises a current collector substrate 1 and two electrode material layers, i.e. the first electrode material layer 2a and the second electrode material layer 2b. The first electrode material layer 2a and the second electrode material layer 2b are formed on the current collector substrate 1 in turn and contains an electrode active material.

The closer the electrode material layer is to the current collector substrate 1, the higher a volume density of the electrode active material in the electrode material layer. In the example shown in Fig.1, the volume density of the electrode active material in the electrode material layer 2a is higher than that of the electrode active material in the electrode material layer 2b, so that the first and second electrode material layers 2a and 2b on the current collector substrate 1 may contain more electrode active material for a given thickness of the battery electrode plate.

It should be noted that the number of the electrode material layers is not limited to two. For example, three or more electrode material layers may be formed on the battery electrode plate in turn.

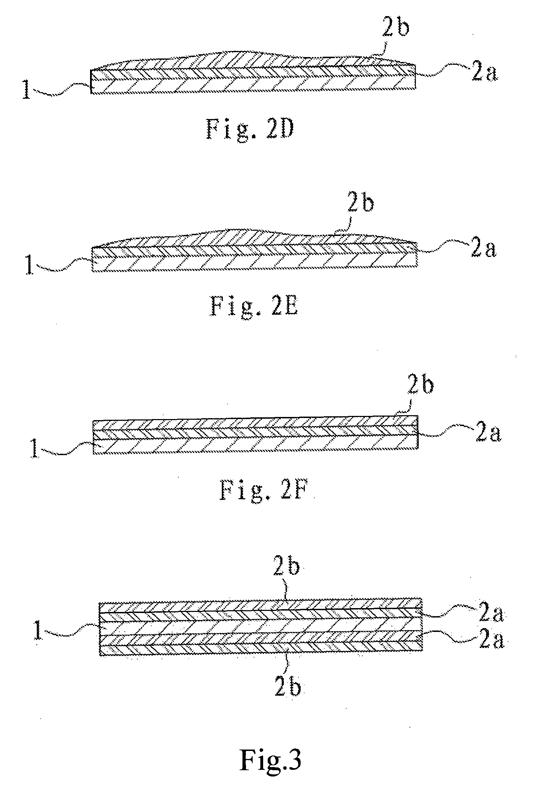

In addition, the first and second electrode material layers 2a and 2b are not limited to be formed on the upper surface of the current collector substrate 1, as shown in Fig. 3, the first and second electrode material layers 2a and 2b are formed on both upper and bottom surfaces of the current collector substrate 1.

The method of preparing the above battery electrode plate will be described in detail with reference to Figs 2A to 2F.

The method of preparing the above battery electrode plate according to an embodiment compries a coating step, a drying step, a calendering step, and a repeating step in which the coating step, the drying step and the calendering step is at least once.

Specially, in the coating step, an electrode material slurry containing an electrode active material is coated onto the current collector substrate 1. In the drying step, the current collector substrate 1 coated with the electrode material is dried so as to from the first electrode material layer 2a on the current collector substrate 1. In the calendering step, the current collector substrate 1 on which the first electrode material layer 2a is formed is calendered. In the repeating step, the coating step to calendering step are repeated at least once so as to form the battery electrode plate.

More particularly, firstly, as shown in Fig. 2A, the electrode material slurry containing an electrode active material is coated onto a current collector substrate 1. The electrode material is coated onto the upper surface of the current collector substrate 1 in Fig. 2A, It should be noted that the electrode material may be coated onto the bottom suface of the battery electrode plate 1 simultaneously, as shown in Fig.3

Then, as shown in Fig. 2B, the current collector substrate 1 is dried, so that the electrode material coated onto the current collector substrate 1 is dried.

Next, as shown in Fig. 2C, the the current collector substrate 1 is calendered, that is, the dried electrode material coated onto the current collector substrate 1 is calendered, so that the electrode material coated onto the current collector substrate 1 forms the first electrode material layer 2a on the current collector substrate 1.

As shown in Fig. 2D, the electrode material slurry is coated onto the first electrode material layer 2a on the current collector substrate 1.

As shown in Fig. 2E, the current collector substrate 1 is dried, so that the electrode material coated onto the first electrode material layer 2a is dried.

Finally, as shown in Fig. 2F, the current collector substrate 1 is calendered, so that the electrode material coated onto the first electrode material layer 2a forms the second electrode material layer 2b on the current collector substrate 1.

According to the above embodiments of the present invention, the steps of coating→drying→calendering are performed and repeated at least once. Therefore the electrode material coated onto the current collector substrate 1 forms two electrode materials layers 2a and 2b.

As described above, it should be noted that the steps of coating→drying→calendering may be repeated twice or thrice, so that three or four electrode materials layers are formed on the current collector substrate 1.

As the electrode material layer closer to the current collector substrate 1 is calendered for more times than the electrode material layers farther from the current collector substrate 1, for example, for the electrode plate has two electrode material layers 2a and 2b, the first material layer 2a is calendered twice, and the second material layer 2b is calendared once. For the electrode plate having three electrode material layers, the third material layer is calendared thrice. Therefore, the first electrode material layer 2a has a higher volume density than the second electrode material layer 2b, and the second electrode material layer 2b has a higher volume density than the third electrode material layer.

In some embodiments, the calendering forces applied on the unit area of the battery electrode plate druing different calendering step are identical, so that the isotropic uniformity of the electrode plate can be improved.

Further, the thickness difference between the electrode material coated in two adjacent coating steps is no more than 50% of a thickness of the thicker electrode material of the electrode material coated in the two adjacent coating steps. For example, the thickness difference between the electrode material forming the first electrode material layer 2a and the electrode material forming the second electrode material layer 2b is no more than half of the thickness of the electrode material forming the first electrode material layer 2a.

The viscosity of the electrode material slurry is 2,8-3,5 Pa·s (2800-3500 CP).

The inventors found that: if the electrode material slurry is coated onto the current collector substrate 1 once in a single coating step, that is, the coating step, the drying step and the calendering step are each performed once and not repeated, the electrode plate will has an uneven surface, the glossiness of the electrode plate is poor, and the battery cycling performance is disadvantageously affected. Embodiments of the present invention solve the above problems to some extent by repeatedly coating, drying and calendering the electrode material at least once so that at least two electrode material layers are formed.

Now, an example of the method of preparing a battery electrode plate will be described, in which the coating→drying→calandering steps are performed twice respectively to complete the preparation of a positive plate, and the total thickness of the positive electrode material coated onto the positive plate is about 260*µ*m. The thickness of the electrode material forming the first electrode material layer 2a and the electrode material of the thickness of the second electrode material layer 2b are respecitvely 160*µ*m and 100*µ*m.

The thickness of the electrode material forming the first electrode material layer 2a and coated onto one surface of the current collector substrate 1 in the first coating step is about 80*µ*m, and the thickness of the electrode material forming the first electrode material layer 2b and coated onto one surface of the current collector substrate 1 in the second coating step is about 50*µ*m.

The thickness difference between the electrode material coated in the two coating steps is about 30*µ*m, which is about 37.5% of the thickness of the electrode material forming the first electrode material layer 2a.

The thickness difference between the electrode material coated in two adjacent coating steps is relatively small. As a result, if the thickness of the battery electrode plate is the same ( in which the thickness of the current collector is given and the same), the density of the electrode active material is high, the distribution of the electrode active material is uniform, the adhering force between the electrode material and the current collector (peeling strength) is strengthened, and the battery capacity is high.

Additionally, the glossiness of the surface of the electrode plate is improved.

Accordingly, the battery cycling performance is better. It should be noted that the electrode material is the residual material in the slurry after the solvent volatilizes. For example, the positive material of lithium secondary battery normally comprises a positive active material and an adhesive agent; the negative material normally comprises a negative active material, an adhesive agent and optionally comprises a conductive agent. In NiMH batteries, the positive material normally comprises a positive active material and a binder.

According to some embodiments, generally, the thickness of the electrode material coated in a former coating step is larger than that of the electrode material coated in a later coating step.

In some embodiments, the coating→drying→calendering steps are performed thrice to complete the preparation of a positive plate, and the total thickness of the positive material coated onto the positive plate is about 360*µ*m. The thickness of the electrode material coated in the first coating step, the thickness of the electrode material coated in the second coating step and the thickness of the electrode material coated in the thrid coating step are respecitvely 100*µ*m, 120*µ*m and 140*µ*m. Accordingly, the thickness of the electrode material coated onto one surface of the current collector substrate 1 in the three coating steps are respectively 50*µ*m, 60*µ*m and 70*µ*m. The coating amount of the electrode material in a former coating step is less than than in a later coating step, so that the slurry is easier to be pressed compact, and the distribution is more uniform. It is easy to obtain an electrode plate with higher density and high glossiness.

In some embodiments, considering mass production requirements, the steps of coating→drying→calandering are repeated for twice or thrice, and more particularly, the steps are repeated twice.

In the present invention, the positive electrode material slurry of the lithium secondary battery containing positive active material has a viscosity of 2,8-3,5 Pa·s 2800-3500CP. The inventors found that: during the preparation of the lithium ion secondary battery if positive electrode material slurry has a viscosity of 2,8-3,5 Pa·s (2800-3500CP), the density of the positive active material on the electrode plate after calendering is more uniform, and the glossiness of the electrode plate is better. Therefore the battery cycling performance is better.

The testing conditions of the viscosity of the electrode material slurry are as follows:
The test is performed under 25°C at a speed of 30n/min by adopting the Brookfild viscometer.

According to the embodiments of the present invention, when the thickness of coated electrode material is the same (the precondition is that the clandering force is the same), if the coating amount is higher, the density of the electrode active material will be higher. Therefore the battery capacity is enhanced. Apparently, the method described herein is suitable for preparing many kinds of battery electrode plates used in different batteries such as Nickel hydrogen battery, Nickel cadmium battery and lithium ion battery.

For the lithium ion secondary battery, as the density of the negative active material has less effect on the battery capacity than the density of the positive active material, the preparation method of lithium ion secondary battery may be any conventional method in the art. The preparation method of the lithium ion secondary battery may include the method according to the embodiments of the present invention.

A secondary battery will be described below.

The secondary battery according to an embodiment of the present invention comprises a battery shell, an electrolyte sealed in the battery shell, and an electrode assembly enclosed in the battery shell, in which the electrode assembly comprises a positive plate, a separator and a negative plate which are coiled or superposed in turn, and the positive and/or negative battery electrode plate is prepared by using a battery electrode plate. The positive and/or negative electrode plate may employ the electrode plate shown in Fig. 1 and prepared by the above method according to the embodiments of the present invention, that is the positive and/or negative battery electrode plate comprises a current collector substrate, and at least two electrode material layers formed on the current collector substrate and containing an electrode active material. The secondary battery comprises a lithium ion secondary.

The structure of the electrode assembly of the secondary battery is known to those skilled in the art. Generally, the battery electrode assembly comprises a positive plate, a separator and a negative plate coiled or superposed in turn, and the separator is disposed between the positive plate and the negative plate. The coiling or superposed manner is known in the art and detailed descriptions thereof are omitted.

The constitution of the positive plate of the secondary battery is known to those skilled in the art. Generally, the positive electrode plate comprises a current collector substrate and a positive electrode material coated onto the current collector substrate.

The selection of the current collector substrate for the secondary battery is known in the art. For example, the positive current collector substrate for lithium secondary batteries may be Al foil, and the negative current collector substrate may be Cu foil;

The positive material for secondary batteries is known to those skilled in the art and comprises a positive active material and an adhesive agent. For example, for the lithium ion secondary battery, the positive active material of the lithium ion secondary battery may be any positive active material used in lithium ion batteries that is known in the art. For example, it may be one or more selected from a group consisted of LiCoO₂, LiNiO₂, LiMn₂O₄, LiFePO₄ and lithium nickel manganese oxidations, and more particularly includes LiFePO₄.

The category as well as the content of the adhesive agent for the positive electrode in secondary batteries is known in the art. Taking the lithium ion secondary battery as an example, the adhesive agent for the positive electrode may be selected from fluorin-contained resin and/or polyolefin composition, such as one or more selected from PVDF, PTFE and SBR. Generally, the content of the adhesive agent for lithium ion secondary batteries may be about 0.01-8wt% of the positive active material, more particularly 1-5wt%.

The negative electrode plate for secondary battery may be any conventional negative electrode plate used in secondary batteries. The negative electrode plate comprises a negative current collector substrate and a negative electrode material coated onto the negative current collector substrate. There is no limitation to the negative electrode material. The negative electrode material may be any generally used negative material for secondary batteries.

Taking the lithium ion secondary battery the negative active material may be any negative active material in the art such as carbon materials. The carbon material may be non-graphite carbon, graphite or carbon formed from polyacetylene through high temperature oxidation, or other carbon material such as pyrolytic carbon, coke, organic macromolecular sinter, active carbon. The organic macromolecular sinter may be formed by firstly sintering and secondly carbonizing phenolic resin, epoxy resin etc. The content as well as the category of the conductive agent for lithium ion secondary battery is known to those skilled in the art. For example, based on the negative electrode material, the content of the conductive agent may be about 0.1-12wt%. The conductive agent for the negative electrode material of lithium ion secondary batteries may be one or more selected from a conductive carbon black, a nickel powder and copper powder.

The adhesive agent for the negative electrode in lithium ion secondary batteries may be any conventional adhesive agent used in the negative electrode of lithium ion secondary batteries. For example, the adhesive agent may be one or more selected from polyvinyl alcohol, polytetrafluoroethylene, carboxymethyl cellulose(CMC), styrene-butadiene rubber(SBR). Generally, the content of the adhesive agent for the negative electrode of the lithium ion secondary batteries may be about 0.5-8wt% of the negative active material, more particularly about 2-5wt%. The adhesive agent for the negative electrode of nickel hydrogen batteries may be one or more selected from any kinds of hydrophobic or hydrophilic adhesive agents. For example, the adhesive agent may be one or more selected from CMC(carboxyl methyl cellulose), hydroxyl propyl methyl cellulose(HPMC), methyl cellulose(MC), polyacrylic acid sodium(PAAS) and polytetrafluorinethylene(PTFE).

The solvent for forming the positive electrode material slurry, and negative electrode material slurry in lithium ion secondary batteries may be any solvent used in art. For example, the solvent may be at least one selected from N-methyl pyrrolidone (NMP), N,N-dimethylformamide (N,N-DMF), N,N-diethylformamide (N,N-DEF), dimethyl sulfoxide (DMSO), tetrahydrofuran (THF), water and alcohol. The dosage of the solvent is suitable for forming the positive electrode material slurry from the positive active material and adhesive agent, and the viscosity of the positive electrode material slurry is known in the art. In the present invention, the viscosity of the positive electrode material slurry is 2,8-3,5 Pa·s (2800∼3500CP). The viscosity of the negative electrode material slurry is the viscosity of the conventional negative electrode material in the art, such as about 3-5 Pa·s (3000-5000CP).

The solvent for forming the positive electrode material slurry, and negative electrode material slurry in nickel hydrogen secondary batteries may be any solvent used in the art; the solvent for forming the positive electrode material slurry, and negative electrode material slurry in nickel cadmium secondary batteries may be any solvent used in the art. The electrolyte for nickel cadmium secondary batteries, nickel hydrogen secondary batteries is also known in the art, and detailed descriptions there will be omitted herein.

The electrolyte for lithium ion secondary may be any conventional electrolyte used in lithium ion secondary batteries. For example, the following electrolyte may be used: 0.5∼2.0mol/L electrolyte salt, mixture slovent of ethylene carbonate and/or propylene carbonate, and low viscosity organic solvent with a viscosity no greater than mPa·s based on a mass ratio of about 0.2 -1.2. The low viscosity organic solvent with a viscosity no greater than mPa·s may be at least one selected from dimethyl cabonate(DMC), diethyl carbonate(DEC), ethyl methyl carbonate(EMC), methyl propyl carbonate(MPC), dimethyl sulfite(DMS), diethyl sulfite(DES). The electrolyte salt may be any conventional electrolyte salt used in the art, such as LiPF₆, LiClO₄, LiBF₄, LiAsF₆, LiSiF₆, LiB(C₆H₅)₄, LiCl, LiBr, LiAlCl₄, and more particularly comprises LiPF₆.

According to some embodiments of the present invention, in the secondary battery, the separator is disposed between the positive electrode plate and the negative electrode plate and may have both electricity insulation and liquid maintaining performance. For example, in a lithium ion secondary battery of an embodiment, polyolefin porous membrane, modified polypropylene felt, polyethylene felt, glass fiber felt, composite film formed by binding or welding a super thin glass fiber nylon felt and a wettable polyolefin porous membrane may be used. The membrane used in nickel hydrogen, nickel cadmium secondary batteries according to background examples may be selected from various kinds of membranes used in alkali secondary batteries, such as polyolefin fiber nonwoven fabric with induced hydrophilic fiber or piece like component after sulfonation treatment.

A method of preparing the secondary battery in some embodiments comprises the steps of: disposing a separator between the positive electrode plate and the negative electrode plate to form an electrode assembly, placing the battery assembly into a battery shell, injecting an electrolyte into the shell and then sealing the battery shell.

The embodiments of the present invention will be further described with reference to some examples of the preparation of the positive electrode plate of the lithium secondary battery and corresponding battery performance.

### Example 1

### 1. Preparation of the positive electrode plate of the lithium ion secondary battery

Preparation of the positive electrode material slurry: adding the positive active material LiFePO₄ of 9200g, the adhesive agent PVDF of 400g and the carbon black of 400g into the solvent NMP of 700g, and then mixing the solution to form a positive electrode material slurry with a viscosity of 3 Pa·s (3000CP).

First coating step: coating the above positive electrode material slurry onto two surfaces (upper and bottom surface) of an Al foil(positive current collector substrate) with an thickness of 16µm by using a coating machine, then drying the coated current collector substrate under 120°C for 0.5h. Finally the dried current collector substrate is calendered by using a calendering machine to obtain the positive plate with a first electrode material layer. The total thickness of the positive electrode material on the positive electrode plate after calendering (the sum of the thickness of the first electrode material layer on the two surfaces, not including thickness of the Al foil) is about 100µm, and the thickness of the first electrode material layer on each surface is about 50µm.

Second coating step: coating the positive electrode plate with the first electrode material layer using the positive electrode material slurry for a second time, in which the positive electrode material slurry is the same as that used in the first coating step. Then, drying the positive electrode plate under 120°C for 0.5h. Finally, calendaring the positive electrode plate and slicing it into individual positive plates having a size of 600mm × 53.5mm × 0.2mm. The calendering force applied to the positive electrode plate in the second coating step is the same as that in the first coating step. The thickness of the positive material coated in the second coating step after calendaring is about 150µm, and the thickness of positive material coated in the second coating step on each surface is about 75µm. Each positive electrode plate contains the positive active material of 18.51 g.

### 2. Preparation of negative electrode plate of the lithium ion secondary battery

Adding a negative active material graphite of 100g, a conductive agent carbon black of 1.9g, an adhesive agent SBR of 3.5g and CMC of 1.0g into the deionized water of 120g and then stirring the mixture in a vacuum mixing machine to form a steady and uniform negative electrode material slurry, coating the negative electrode material slurry onto a Cu foil current collector substrate with a thickness of about 8*µ*m by a coating machine, then drying the coated current collector substrate under 100°C for 15 minutes. Finally calendaring the dried current collector substrate and slicing it into individual negative electrode plates with a size of 610mm × 55.5mm × 0.18mm. Each negative electrode plate contains a negative active material of 7.72g.

### 3. Preparation of battery

Superposing and then coiling the above positive plate, a separator (three-layers PE/PP/PE film having a total thickness of 18µm) and the above negative electrode plate are in turn to form a cylindrical core, then placing the core into a cylindrical steel shell having a diameter of 18mm and a height of 65mm. Injecting the electrolyte into the shell and sealing the shell to form a cylindrical lithium ion battery. The electrolyte may comprise: a mixed solvent of EC, DEC and DMC with a mass ratio of 1:1:1, in which the electrolyte salt is of LiPF₆ with a concentration of 1mol/L.

### Example 2

In the example 2, the thickness of the electrode material coated in the first coating step and the second coating step are 150µm and 100µm respectively. Accordingly, the thickness of the electrode material coated onto one surface of the substrate in the first coating step and the second coating step are 75µm and 50µm respectively. Each positive electrode plate contains a positive active material of about 18.5g. The other operations in the example 2 are identical with that in the example, and detailed descriptions thereof are omitted here.

### Comparative example 1

Comparing to the example 1, in the comparative example 1, after coating and drying the positive electrode material slurry, calendaring is not performed, and the second coating step is directly performed to coat the positive electrode material slurry for a second time on the wet positive electrode material coated in the first coating step. After the second coating step, the calendaring is performed to form the positive electrode plate for lithium ion secondary battery. The total thickness of the positive active material (not including the thickness of the positive current collector substrate) is about 250µm. Each positive electrode plate contains the positive active material LiFePO₄ of 16.1 g.

### Comparative example 2

In the comparative example 2, the positive electrode plate for a lithium ion secondary battery is prepared by using the conventional preparation method in which the coating operation is performed only once. After calendaring, the total thickness of the positive electrode material (not including the thickness of the positive current collector substrate) on the positive electrode plate is about 250µm, which is the same as that in example 1. The volume density is 480g/m², and each positive electrode plate contains the positive active material LiFePO₄ of 13.42g.

The chemical material and testing equipments used in the present invention are shown as table 1 and table 2.

The peeling strength, practical battery capacity and the cycling performance under normal temperature are tested according to the method below and the results are shown as table 3.

Testing method of peeling strength of electrode plates: cutting the plate into individual electrode plates with a size of 120mm × 40mm, and the peel strength testing equipment in table 2 is used to test the peeling force between the coating layer and the current collector substrate.

Initial discharge capacity of the battery: charging the battery at 1C current to a voltage of 4.2V under normal temperature, then charging at a constant voltage, with a cut-off current of 0.05C, then discharging at 1C constant current to a voltage of 2.75V. The designed capacity C=2500mAh.

Cycling performance test under normal temperature: according to the above initial discharge capacity testing method, 100 cycles are performed, and the discharge capacity of the battery is tested. The ratio of the discharge capacity after 100 cycles with the initial discharge capacity is the battery capacity maintaining rate (%).

**Table 1 Chemical material/source material used in some embodiments of the present invention**

| Chemical material/source mateiral | Purity/type | Source |
|---|---|---|
| LiFePO₄ | Battery level | Tianjin STL Energy Technology Co., Ltd. |
| Adhesive agent | Battery level | / |
| Carbon black | Battery level | / |
| NMP | Industry level | / |
| Graphite | Battery level | / |

**Table 2 Testing equipments**

| Name | Producing area and type |
|---|---|
| Constant temperature and humidity oven | Qingsheng KTSB-410TBS |
| Brookfild viscometer | Brookfild company |
| Peeling strength machine | Taiwan Shunyin Co.,Ltd. |

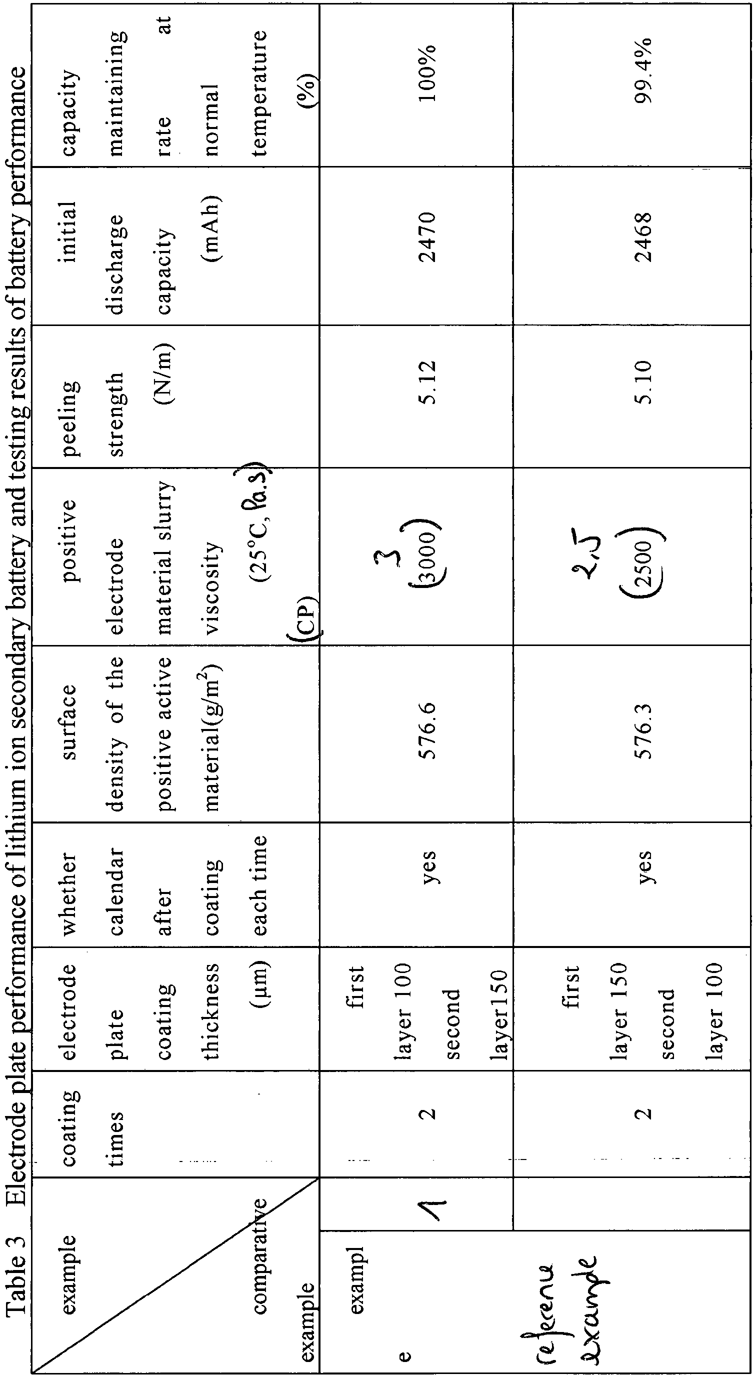

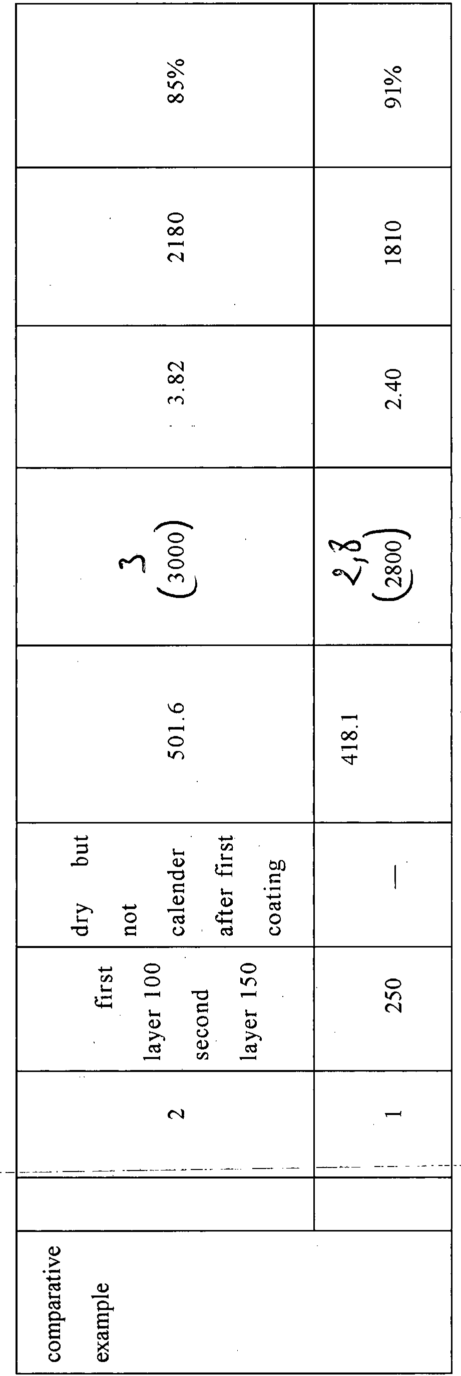

Comparing the above examples and comparative examples, it is known that:
1. While the thickness of the current collector substrate is the same, the positive electrode plate for lithium ion secondary battery prepared according to embodiments of the present invention has improved volume density and improved peeling strength between the positive material and the current collector substrate, and the peeling strength is increased averagely by about 2.5N/m, reaching more than about 5.1N/m.
2. While the thickness of the current collector substrate is the same, the lithium ion secondary battery prepared according to embodiments of the present invention has improved initial discharge capacity and capacity maintaining rate after 1000 cycles under normal temperature, and the capacity maintaining rate after 1000 cycles reaches about 95%.
3. Under room temperature and when the positive electrode material slurry viscosity of the lithium ion secondary battery is about 3 Pa·s (3000CP), the capacity maintaining rate after 1000 cycles is better than the capacity maintaining rate while the positive electrode material slurry viscosity of the lithium ion secondary battery is about 2,5 Pa·s (2500CP).

## Claims

1. A method of preparing a battery electrode plate for a lithium secondary battery, comprising:
a coating step of coating a positive electrode material slurry containing positive electrode active material onto a current collector substrate;
a drying step of drying the current collector substrate coated with the positive electrode material so as to form an electrode material layer on the current collector substrate;
a calendering step of calendering the current collector substrate on which the electrode material layer is formed;
repeating the coating step, the drying step and the calendering step at least once so as to form the battery electrode plate, wherein
the closer the electrode material layer is to the current collector substrate, the higher a volume density of the positive electrode active material in the electrode material layer, **characterized in that**
viscosity of the positive electrode material slurry is 2,8-3,5 Pa·s (2800-3500CP).

2. A method according to claim 1, wherein calendering forces applied on a unit area of the battery electrode plate during different calendering steps are identical.

3. A method according to claim 2, wherein a thickness difference between the electrode material coated in two adjacent coating steps is no more than 50% of a thickness of the thicker electrode material of the electrode material coated in the two adjacent coating steps.

4. A battery electrode plate for a lithium secondary battery, manufactured by the method according to any of claims 1 to 3.

## Patentansprüche

1. Verfahren zur Herstellung einer Batterieelektrodenplatte für eine Lithium-Sekundärbatterie, umfassend:
einen Beschichtungsschritt zum Auftragen eines Materialbreis für die positive Elektrode, der aktives Material für die positive Elektrode enthält, auf eine Stromkollektorträgerschicht;
einen Trocknungsschritt zum Trocknen der Stromkollektorträgerschicht, die mit dem positiven Elektrodenmaterial beschichtet ist, zur Bildung einer Elektrodenmaterialschicht auf der Stromkollektorträgerschicht;
einen Kalandrierungsschritt zum Kalandrieren der Stromkollektorträgerschicht, auf der die Elektrodenmaterialschicht gebildet ist;
Wiederholen des Beschichtungsschritts, des Trocknungsschritts und des Kalandrierungsschritts mindestens einmal, so dass die Batterieelektrodenplatte gebildet wird, wobei
eine Volumendichte des aktiven Materials für die positive Elektrode in der Elektrodenmaterialschicht umso höher ist, je näher sich die Elektrodenmaterialschicht an der Stromkollektorträgerschicht befindet, **dadurch gekennzeichnet, dass**
eine Viskosität des Materialbreis für die positive Elektrode 2,8 - 3,5 Pa.s (2800 - 3500 CP) ist.

2. Verfahren nach Anspruch 1, wobei Kalandrierungskräfte, die auf eine Flächeneinheit der Batterieelektrodenplatte während verschiedener Kalandrierungsschritte ausgeübt werden, identisch sind.

3. Verfahren nach Anspruch 2, wobei ein Dickenunterschied zwischen dem Elektrodenmaterial, das in zwei aufeinanderfolgenden Beschichtungsschritten aufgetragen wird, nicht mehr als 50% einer Dicke des dickeren Elektrodenmaterials ist, das in den zwei aufeinanderfolgenden Beschichtungsschritten aufgetragen wird.

4. Batterieelektrodenplatte für eine Lithium-Sekundärbatterie, die durch das Verfahren nach einem der Ansprüche 1 bis 3 hergestellt wird.

## Revendications

1. Procédé de préparation d'une plaque d'électrode de batterie pour une batterie secondaire au lithium, comprenant :
une étape de revêtement consistant à déposer une suspension de matériau d'électrode positive contenant un matériau actif d'électrode positive sur un substrat de collecteur de courant ;
une étape de séchage consistant à sécher le substrat de collecteur de courant revêtu du matériau d'électrode positive de manière à former une couche de matériau d'électrode sur le substrat de collecteur de courant ;
une étape de calandrage consistant à calandrer le substrat de collecteur de courant sur lequel la couche de matériau d'électrode est formée ;
la répétition de l'étape de revêtement, de l'étape de séchage et de l'étape de calandrage au moins une fois de manière à former la plaque d'électrode de batterie, dans lequel
plus la couche de matériau d'électrode est proche du substrat de collecteur de courant, plus une densité volumique du matériau actif d'électrode positive dans la couche de matériau d'électrode est élevée, **caractérisé en ce que**
une viscosité de la suspension de matériau d'électrode positive est de 2,8 à 3,5 Pa.s (2800 à 3500 CP).

2. Procédé selon la revendication 1, dans lequel des forces de calandrage appliquées sur une zone unitaire de la plaque d'électrode de batterie pendant différentes étapes de calandrage sont identiques.

3. Procédé selon la revendication 2, dans lequel une différence d'épaisseur entre le matériau d'électrode déposé au cours de deux étapes de revêtement adjacentes est inférieure ou égale à 50% d'une épaisseur du matériau d'électrode plus épais du matériau d'électrode déposé au cours des deux étapes de revêtement adjacentes.

4. Plaque d'électrode de batterie pour une batterie secondaire au lithium, fabriquée par le procédé selon l'une des revendications 1 à 3.
